# EUROPÄISCHE PATENTANMELDUNG

(11) **EP 0 898 184 A2**
(43) Veröffentlichungstag der Anmeldung: **24.02.1999**
(21) Anmeldenummer: 98115430.5
(22) Anmeldetag: 17.08.1998
(51) Int. Cl.: G02B 6/04, F21V 8/00

(54) **Verfahren zum Herstellen einer Koppelvorrichtung und eine Koppelvorrichtung für Lichtleitfasern**

(30) Priorität: 20.08.1997 DE 19736038
(71) Anmelder: Hella KG Hueck & Co., 59552 Lippstadt (DE)
(72) Erfinder: Giepen, Bernd, 59597 Erwitte (DE); Korff, Detlef, 59557 Lippstadt (DE); Merkelbach, Frank, Dr., 59597 Erwitte (DE); Rixen, Heinz-W., Dr., 59556 Lippstadt (DE)

(57) **Zusammenfassung**

Die Erfindung betrifft eine Koppelvorrichtung und ein Verfahren zum Herstellen einer Koppelvorrichtung für Lichtleitfasern, wobei an den Enden der Lichtleitfasern die Ummantelung entfernt wird, ein Bündel von Lichtleitfasern mit ihren Enden in eine Hülse eingeführt wird und die Hülse in radialer Richtung zusammengedrückt wird zur Klemmung des Bündels innerhalb der Hülse, wobei ein Endbereich des Bündels von Lichtleitfasern (2) derart erwärmt wird, daß der Querschnitt der Hülse (1) vollständig durch die Lichtleitfasern (2) ausgefüllt ist und die Lichtleitfasern (2) in der Hülse (1) durch Preßverbindung gehalten sind.

## Beschreibung

Die Erfindung betrifft ein Verfahren zum Herstellen einer Koppelvorrichtung für Lichtleitfasern, wobei an den Enden der Lichtleitfasern ein Schutzmantel entfernt wird, ein Bündel von Lichtleitfasern mit ihren Enden in eine Hülse geführt wird und die Hülse in radialer Richtung zusammengedrückt wird zur Klemmung der Lichtleitfasern innerhalb der Hülse.

Ferner betrifft die Erfindung eine Koppelvorrichtung für Lichtleitfasern mit einer Hülse, die die Enden eines Bündels von Lichtleitfasern klemmend umgibt.

Aus der DE 24 49 441 A1 ist eine Koppelvorrichtung für Lichtleitfasern bekannt, die eine einen Endbereich eines Bündels von Lichtleitfasern umschließende Hülse aufweist. In der Hülse sind die Lichtleitfasern klemmend gehalten. Nachteilig an der bekannten Koppelvorrichtung ist, daß der randseitige Querschnitt der Hülse nicht vollständig durch die Lichtleitfasern ausgefüllt ist.

Aus der DE 43 09 388 C2 ist eine Koppelvorrichtung für Lichtleitfasern mit einer Hülse bekannt, die den Endbereich eines Bündels von Lichtleitfasern pressend umgibt. Zur Herstellung des Preßsitzes besteht die Hülse aus einem wärmeschrumpfbaren Material. Die entmantelten Enden der Lichtleitfasern werden unter Reckung in die Hülse eingeführt. Anschließend erfolgt eine Schrumpfung der Lichtleitfasern in der Länge, so daß ein Preßsitz der Lichtleitfasern in der Hülse gewährleistet ist. Auch diese Koppelvorrichtung ermöglicht kein vollständiges Ausfüllen der randseitigen Querschnittsflächen der Hülse durch die Lichtleitfasern.

Aus der EP 0 468 723 B1 ist eine Koppelvorrichtung für Lichtleitfasern mit einer Hülse bekannt, die zum außenliegenden Rand verjüngend ausgebildet ist. Die in die Hülse eingeführten entmantelten Lichtleitfasern werden unter Anwendung einer radialen Kraft zusammengedrückt und derart verformt, daß die randseitige Querschnittsfläche der Hülse vollständig durch die Enden der Lichtleitfasern ausgefüllt ist. Nachteilig an der bekannten Koppelvorrichtung ist, daß das vollständige Ausfüllen der randseitigen Querschnittsfläche der Hülse ausschließlich durch mechanische Verformung der Lichtleitfasern bzw. der Hülse erfolgt. Diese Verpressung erfolgt lediglich in einem Randbereich, wobei randseitig eine die Querschnittsfläche der Enden der Lichtleitfasern abdeckende transparente Abdeckung aufgeklebt ist. Zusätzlich ist es erforderlich, daß außerhalb des Randbereichs ein Klebstoff eingebracht wird zum Verbinden der Lichtleitfasern miteinander.

Aufgabe der vorliegenden Erfindung ist es daher, ein Verfahren zum Herstellen einer Koppelvorrichtung für Lichtleitfasern anzugeben, daß auf einfache Weise ein Ein- oder Auskoppeln von Licht um bzw. aus einem Bündel von Lichtleitfasern bei maximaler Lichtausbeute ermöglicht.

Zur Lösung dieser Aufgabe ist das erfindungsgemäße Verfahren dadurch gekennzeichnet, daß ein Endbereich des Bündels von Lichtleitfasern derart erwärmt wird, daß der Querschnitt der Hülse vollständig durch die Lichtleitfasern ausgefüllt ist und die Lichtleitfasern in der Hülse durch Preßverbindung gehalten sind.

Durch die Erwärmung der Enden der Lichtleitfasern nach dem Festklemmen derselben innerhalb der Hülse wird ein vollständiges Ausfüllen der Querschnittsfläche der Hülse durch die Lichtleitfasern ermöglicht. Es wird eine homogene Querschnittsvergrößerung der Lichtleitfaserenden geschaffen, wobei die Lichtleitfasern im wesentlichen den gleichen Querschnitt aufweisen.

Vorzugsweise erfolgt die Erwärmung der Lichtleitfasern in einem Abschnitt, in dem die Lichtleitfasern nicht durch eine Ummantelung umhüllt sind. Hierdurch wird ein definierter Endbereich der Lichtleitfasern geschaffen, in dem dieselben einen erhöhten Querschnitt aufweisen.

Nach einer Weiterbildung der Erfindung werden die Lichtleitfasern in ihrem Endbereich kurzzeitig auf einen erhöhten Temperaturwert erwärmt. Dieser Temperaturwert liegt oberhalb einer Temperatur von 150° C, die unter anderem abhängig ist von einer vor dem Einführen der Lichtleitfaserenden in die Hülse erfolgten Reckung derselben.

Ferner ist es Aufgabe der Erfindung, eine Koppelvorrichtung für Lichtleitfasern auszubilden, die eine zuverlässige Verbindung zwischen den Enden eines Bündels von Lichtleitfasern und einer die Enden umgebenden Hülse gewährleistet.

Zur Lösung dieser Aufgabe ist die erfindungsgemäße Koppelvorrichtung dadurch gekennzeichnet, daß das Material der Hülse und der Lichtleitfasern derart gewählt ist, daß infolge einer kurzzeitigen Erwärmung der Enden der Lichtleitfasern ein Preßsitz der Lichtleitfasern innerhalb der Hülse unter vollständiger Ausfüllung des Hülsenquerschnitts gebildet ist.

Die erfindungsgemäße Koppelvorrichtung ermöglicht auf einfache Weise eine dauerhafte Vergrößerung der Enden von Lichtleitfasern innerhalb einer dieselben umgebenden Hülse, wobei ein Kernbereich der Lichtleitfasern den korrespondierenden Abschnitt der Hülse vollständig ausfüllen. Das Material für die Hülse einerseits und für die Lichtleitfasern andererseits ist so gewählt, daß die Temperaturerhöhung lediglich eine plastische Verformung der Lichtleitfasern und nicht der Hülse bewirkt. Ferner ist die Wärmeeinwirkung auf die Lichtleitfasern nicht so hoch, daß die Lichtleitfasern miteinander verschmolzen würden.

Nach einer besonderen Ausführungsform der erfindungsgemäßen Vorrichtung ist die Hülse als zweistufige Hülse ausgebildet, wobei das äußere, mit einem geringeren Durchmesser versehene Hülsensegment einen Kernbereich der Lichtleitfasern umgibt. Über die gesamte Länge dieses äußeren Hülsensegments weist der Kernbereich der Lichtleitfasern einen erhöhten Querschnitt auf. Ein sich an das äußere Hülsensegment anschließendes innere Hülsensegment umschließt die Lichtleitfasern einschließlich einer Ummantelung. In diesem Abschnitt der Hülse weist der Kernbereich der Lichtleitfasern keinen erhöhten Querschnitt auf. Vorteilhaft sind die Lichtleitfasern über die gesamte Länge der Hülse in derselben klemmend gehalten, wobei zusätzlich im Bereich des äußeren Hülsensegments eine Verpressung der Lichtleitfasern infolge kurzzeitigen Aufwärmens gegeben ist.

Ein Ausführungsbeispiel der Erfindung wird nachfolgend anhand der Zeichnungen näher erläutert.

Es zeigen:
- Figur 1:: Eine Seitenansicht eines von einer Hülse umgebenden Endbereiches eines Bündels von Lichtleitfasern,
- Figur 2:: eine Seitensansicht der Hülse und des abstehenden Endes des Bündels nach kurzzeitiger Erhitzung und

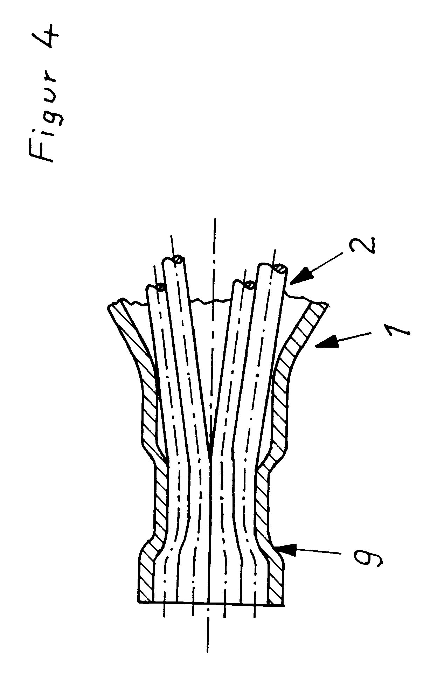

- Figur 3:: einen Teilquerschnitt eines äußeren Hülsensegments der Hülse mit den querschnittausfüllenden Lichtleiterfasern.
- Figur 4:: einen schematischen Längsschnitt der Hülse mit Lichtleitern

Die erfindungsgemäße Kopplungsvorrichtung dient vorzugsweise zum Einkoppeln einer nicht dargestellten Lichtquelle in ein Bündel von Lichtleitfasern. Alternativ kann die Kopplungsvorrichtung auch zum Auskoppeln von durch die einzelnen Lichtleitfasern geführten Lichtstrahlen auf eine zu beleuchtende Fläche angewendet werden.

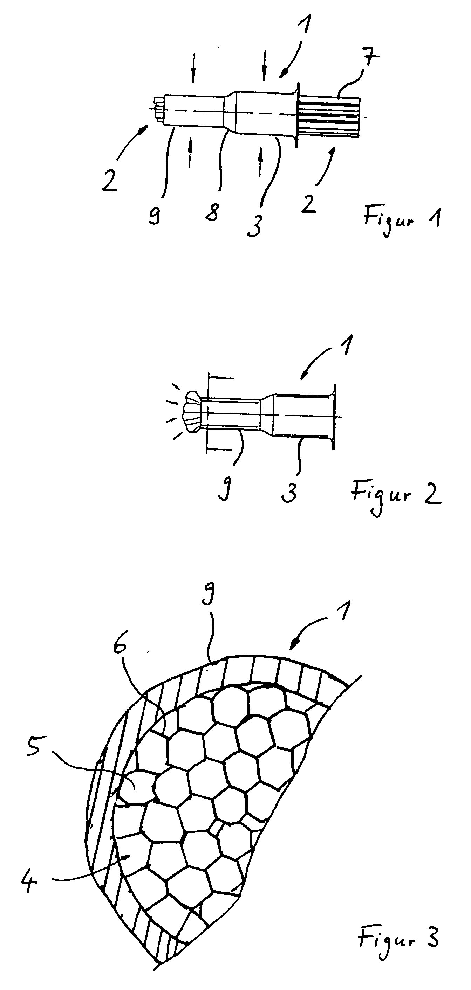

Wie aus Figur 1 zu ersehen ist, besteht die Kopplungsvorrichtung aus einer stufenförmigen Hülse 1, die einen Endbereich eines Bündels von Lichtleitfasern 2 umgibt. Die Hülse 1 weist ein inneres Hülsensegment 3 auf, dessen Innendurchmesser zu dem Durchmesser des Bündels der Lichtleitfasern 2 korrespondiert.

Die Lichtleitfasern 2 bestehen jeweils aus einem Kernbereich 4 mit einem zylinderförmigen Kern 5 und einem diesen umgebenden ringförmigen Überzug 6. Der Kern 5 besteht aus einem lichtübertragenden Material relativ hoher Brechkraft beispielweise PMMA, und der Überzug 6 besteht aus einem Material geringerer Lichtbrechkraft, beispielweise PTFE. Der Kernbereich 4 ist von einer lichtundurchlässigen Ummantelung 7 umgeben.

In Richtung der Enden der Lichtleitfasern 2 schließt an dem inneren Hülsensegment 3 ein konusförmiges mittleres Hülsensegment 8 an, das in ein zylinderförmiges äußeres Hülsensegment 9 übergeht. Das äußere Hülsensegment 9 umschließt einen entmantelten Abschnitt des Bündels der Lichtleitfasern 2, wobei der Innendurchmesser des äußeren Hülsensegments 9 im wesentlichen zu dem Durchmesser des aus dem Kernbereich 4 bestehenden Bündels korrespondiert.

Nachfolgend wird das Verfahren zum Herstellen der Koppelvorrichtung beschrieben. In einem ersten Schritt wird die Ummantelung 7 auf einer Länge von ca. 10 bis 15 mm von den einzelnen Lichtleitfasern 2 entfernt. Nachfolgend werden die Lichtleitfasern 2 als Bündel in die zweistufige Hülse 1 eingesetzt.

Die Enden der Lichtleitfasern 2 stehen aus der randseitigen Öffnung des äußeren Hülsensegments 9 etwa 0,5 mm heraus. Anschließend werden über die gesamte Länge der Hülse 1 radiale Kräfte auf die Hülse 1 ausgeübt, so daß die Lichtleitfasern 2 innerhalb der Hülse 1 klemmend gehalten sind. Vorzugsweise wird die Hülse mittels Prägewerkzeugen sternförmig gekrimpt. Anschließend wird das äußere Hülsensegment 9 einer kurzzeitigen Erhitzung unterzogen, so daß Lichtleitfasern 2 im gesamten Bereich des äußeren Hülsensegments 9 sich ausdehnen und die gesamte Querschnittssfläche des äußeren Hülsensegments 9 vollständig ausfüllen. Dieser Anschwellvorgang erfolgt in einem Zeitintervall von 5 bis 10 Sekunden, wobei eine Anschwelltemperatur von mindestens 150° C auf die Lichtleitfasern 2 einwirkt. Vorzugsweise liegt die Anschwelltemperatur in einem Bereich zwischen 200° und 350° C. Die Anschwelltemperatur wird dabei so gewählt, daß der Kernbereich der Lichtleitfasern 2 plastisch verformbar ist, vorzugsweise der Überzug 6. Das Material für die Hülse 1 ist derart gewählt, daß die Hülse 1 in den Bereich der Anschwelltemperatur keine Formänderung erfährt. Die Hülse 1 kann beispielsweise aus einem Kunststoffmaterial oder aus einem metallischen Werkstoff bestehen.

Alternativ können die Lichtleitfasern 2 auch vor dem Einsetzen in die Hülse 1 einer Reckung unterzogen worden sein, so daß die Formänderung der Lichtleitfasern 2 bei kurzzeitigen Erhitzen in Richtung einer Querschnittsvergrößerung erleichtert wird.

Die kurzzeitige Erhitzung der Lichtleitfasern 2 bewirkt einen Preßsitz der Lichtleitfasern 2 innerhalb des äußeren Hülsensegments 9. Es bildet sich eine vergrößerte Koppeloberfläche aus, wobei die Lichtleitfasern 2 im Kernbereich 4 im wesentlichen wabenförmig ausgeformt sind. Es bildet sich somit automatisch eine optimale Ausnutzung der zylindrischen Querschnittsfläche der Hülse 1. Ferner läßt sich dadurch eine relativ hohe Packungsdichte von Lichtleitfasern 2 innerhalb des zylindrischen Hülsensegments 9 erzielen.

Abschließend werden die hervorstehenden Enden der Lichtleitfasern 2 bündig zu dem Rand des äußeren Hülsensegments 9 abgeschnitten.

Alternativ kann es vorteilhaft sein, den Rand des äußeren Hülsensegments 9 mit abzuschneiden. Der Schneidvorgang wird dabei durch den Preßsitz der Lichtleitfasern 2 innerhalb des äußeren Hülsensegments 9 erleichert. Der Schneidvorgang kann dabei durch ein Fräsen erfolgen.

Figur 4 zeigt einen schematischen Längsschnitt durch die Hülse 1 nach abgeschlossener Bearbeitung. Durch die partielle Querschnittsänderung der Hülse 1 im Bereich des äußeren Hülsensegments 9 in Verbindung mit der Querschnittsänderung der Leitleitfasern 2 ergibt sich ein Formschluß zwischen der Hülse 1 und den Lichtleitfasern 2.

## Patentansprüche

1. Verfahren zum Herstellen einer Koppelvorrichtung für Lichtleitfasern, wobei an den Enden der Lichtleitfasern die Ummantelung entfernt wird, ein Bündel von Lichtleitfasern mit ihren Enden in eine Hülse eingeführt wird und die Hülse in radialer Richtung zusammengedrückt wird zur Klemmung des Bündels innerhalb der Hülse, dadurch gekennzeichnet, daß ein Endbereich des Bündels von Lichtleitfasern (2) derart erwärmt wird, daß der Querschnitt der Hülse (1) vollständig durch die Lichtleitfasern (2) ausgefüllt ist und die Lichtleitfasern (2) in der Hülse (1) durch Preßverbindung gehalten sind.

2. Verfahren nach Anspruch 1, dadurch gekennzeichnet, daß die Lichtleitfasern (2) vor dem Einführen in die Hülse (1) gereckt werden.

3. Verfahren nach Anspruch 1 oder 2, dadurch gekennzeichnet, daß die Enden der Lichtleitfasern (2) kurzzeitig auf eine Anschwelltemperatur erwärmt werden, so daß ein Kern (5) und/oder ein Überzug (6) der Lichtleitfasern (2) querschnittsvergrößernd verformt werden.

4. Verfahren nach einem der Ansprüche 1 bis 3, dadurch gekennzeichnet, daß die Lichtleitfasern (1) in einem Zeitintervall von 5 bis 10 Sekunden auf eine Anschwelltemperatur von mindestens 150° C erhitzt werden.

5. Verfahren nach einem der Ansprüche 1 bis 4, dadurch gekennzeichnet, daß die hervorstehenden Enden der Lichtleitfasern (2) nach der kurzzeitigen Erhitzung auf eine gleiche Länge abgeschnitten werden.

6. Verfahren nach einem der Ansprüche 1 bis 5, dadurch gekennzeichnet, daß durch Erzeugung der Querschnittsänderungen der Hülse (1) und der Lichtleitfasern (2) sich ein Formschluß zwischen der Hülse (1) und den Lichtleitfasern einstellt.

7. Koppelvorrichtung für Lichtleitfasern mit einer Hülse, die die Enden eines Bündels von Lichtleitfasern klemmend umgibt, dadurch gekennzeichnet, daß das Material der Hülse (1) und der Lichtleitfasern (2) derart gewählt ist, daß infolge einer kurzzeitigen Erwärmung der Enden der Lichtleitfasern (2) ein Preßsitz der Lichtleitfasern (2) innerhalb der Hülse (1) unter vollständiger Ausfüllung des Hülsenquerschnitts gebildet ist.

8. Koppelvorrichtung nach Anspruch 7, dadurch gekennzeichnet, daß die Hülse (1) als zweistufige Hülse ausgebildet ist, wobei ein äußeres Hülsensegment (9) mit geringerem Durchmesser lediglich ein Bündel von einem Kernbereich (4) bestehenden Lichtleitfasern (2) und ein inneres Hülsensegment (3) mit größerem Durchmesser einen Abschnitt des Bündels bestehend aus einem mit einer Ummantelung (7) versehen Kernbereich (4) umgibt.

9. Koppelvorrichtung nach Anspruch 7 oder 8, dadurch gekennzeichnet, daß die Anschwelltemperatur derart gewählt ist, daß die Ummantelung (7) und/oder der Kern (5) der Lichtleitfasern (2) plastisch verformbar ist.

10. Koppelvorrichtung nach einem der Ansprüche 7 bis 9, dadurch gekennzeichnet, daß die Hülse (1) aus einem im Bereich der Anschwelltemperatur formstabilen Material besteht.

11. Koppelvorrichtung nach einem der Ansprüche 7 bis 10, dadurch gekennzeichnet, daß die Lichtleitfasern (2) in dem Bereich des äußeren Hülsensegments (9) im Querschnitt wabenförmig ausgebildet sind.

12. Koppelvorrichtung nach einem der Ansprüche 7 bis 11, dadurch gekennzeichnet, daß durch die vollständige Ausfüllung des Hülsenquerschnitts durch die Lichtleitfasern (2) und durch eine partielle Querschnittsverengung des äußeren Hülsensegments (9) ein Formschluß zwischen der Hülse (1) und den Lichtleitfasern (2) gebildet ist.
